# EUROPEAN PATENT APPLICATION

(11) **EP 2 897 310 A1**
(43) Date of publication of application: **22.07.2015**
(21) Application number: 14305062.3
(22) Date of filing: 16.01.2014
(51) Int. Cl.: H04B 10/073, G01M 11/00

(54) **Method and system for monitoring infrastructure using BOTDA**

(71) Applicant: ALCATEL LUCENT, 92100 Boulogne-Billancourt (FR)
(72) Inventor: Le Roux, Patrice, 91620 Nozay (FR); Lecroart, Antoine, 91620 Nozay (FR)
(74) Representative: MERH-IP Matias Erny Reichl Hoffmann

(57) **Abstract**

The present document relates to a system for monitoring an infrastructure using Brillouin Optical Time Domain Analysis, the system comprising a first optical fiber portion (220); a first optical signal source (230) coupled with the first optical fiber portion (220) and generating an optical probe signal for propagating in a first direction in the first optical fiber portion (220); a second optical signal source (240) for generating an optical pump signal for propagating in a second direction opposite to the first direction, the optical pump signal to interact with the optical probe signal for generating a modified optical probe signal propagating in the first direction; analysis means (250) coupled with the first optical fiber portion (220) for analyzing the modified optical probe signal; a second optical fiber (260) coupled with the second optical signal source (240); an optical amplifier (300) in the first optical fiber portion (220) for amplifying the modified optical probe signal; and coupling means (270) for optical coupling the second optical fiber (260) with the first optical fiber portion (220), the coupling means (270) for coupling at least a portion of the pump signal propagating within the second optical fiber (260) into the first optical fiber portion (220).

## Description

The present document relates to monitoring systems. In particular, the present document relates to a system enabling strain and temperature monitoring throughout optical fibers located over large infrastructures using Brillouin Optical Time Domain Analysis (BOTDA).

In BOTDA systems, an optical pump signal generates spontaneous Brillouin scattering in a monitoring fiber. This Brillouin scattering can be optically stimulated (so-called Stimutaled Brillouin Scattering) leading to a large intensity of the scattering mechanism. The Stimulated Brillouin scattering principle is based on the interaction between the optical pump signal and a counterpropagating optical probe signal.

The maximum energy transfer from the optical pump signal to the optical probe signal, so-called Brillouin amplification, takes place at every fiber location where the frequency separation among the optical waves equals the local acoustic frequency in the fiber, the so-called Brillouin frequency shift, which is a temperature-and strain-dependent parameter. So, the Brillouin frequency shift provides information about the temperature and strain variations along the whole monitoring fiber. Local information about the Brillouin frequency shift can be obtained by using a pulsed optical pump signal. The spatial resolution is determined by the temporal width of the pulse launched into the optical fiber, wherein typical spatial resolutions are in the range of 1 - 3m.

Current monitoring systems using BOTDA may have a measurement reach in the range of 50-150km. The measurement reach is limited by the optical budget of the signals involved in BOTDA and optical signal to noise ratio (OSNR) of the analyzed modified optical probe signal which is obtained by Brillouin interaction of the optical pump signal with the optical probe signal. For a plurality of monitoring applications, e.g. submerged or submarine applications (for instance: pipeline integrity monitoring), it is desirable to have an extended measurement reach.

Hence, there is a need to provide for an improved monitoring system using BOTDA which provides an extended measurement reach. Similarly, a method for monitoring infrastructures with an extended measurement reach is desired.

According to a first aspect, a system for monitoring an infrastructure using BOTDA is presented. The system comprises a first optical fiber portion. The first optical fiber portion may run along the infrastructure, e.g. a submerged infrastructure such as a pipeline. The first optical fiber portion may be coupled with the infrastructure to be monitored such that variations of temperature and/or strain of the infrastructure are transferred to the first optical fiber portion leading to temperature and/or strain variations of the first optical fiber portion. The system further comprises a first optical signal source which is coupled with the first optical fiber portion. The first optical signal source is configured for generating an optical probe signal for propagating in a first direction within the first optical fiber portion. The optical probe signal may be a continuous wave signal (CW). In addition, the system comprises a second optical signal source which may be coupled with the first optical fiber portion. The second optical signal source generates an optical pump signal for propagating in a second direction within the first optical fiber portion opposite to the first direction. The optical pump signal is adapted to interact with the optical probe signal for generating a modified optical probe signal. Specifically, the optical pump signal may be a pulsed optical signal. The modified optical probe signal is obtained by Brillouin interaction of the optical pump signal with the optical probe signal. The modified optical probe signal may propagate in the first direction within the first optical fiber portion. The monitoring system further comprises analysis means being coupled with the first optical fiber portion. The analysis means may be adapted for analyzing the modified optical probe signal. Specifically, the analysis means may be adapted to detect a frequency shift of the modified optical probe signal caused by a temperature and/or strain variation of the monitored infrastructure.

In addition, the analysis means may perform time domain analysis in order to determine the location at which the temperature and/or strain variation occurred.

The monitoring system further comprises a second optical fiber, possibly also disposed along the infrastructure. The second optical fiber is coupled with the second optical signal source. Due to the coupling, the optical pump signal generated by the second signal source may propagate in the second direction within the second optical fiber, i.e. in the same direction the optical pump signal is propagating within the first optical fiber portion. Specifically, the second optical fiber may be coupled with the first fiber portion in a spatial distributed manner, e.g. at given distances.

In order to enhance the measurement reach of the monitoring system, at least one optical amplifier may be associated with the first optical fiber portion for amplifying the optical probe signal, respectively, the modified optical probe signal. In addition, at least one optical amplifier may be associated with the second optical fiber for amplifying the optical pump signal. The optical amplifiers may be adapted to amplify the optical signals necessary for Brillouin interaction in order to keep the signal levels in a range suitable for the Brillouin interaction.

The monitoring system further comprises coupling means for optical coupling the second optical fiber with the first optical fiber portion. In other words, the optical coupling couples the optical pump signal into the first optical fiber portion. The coupling means are adapted for coupling at least a portion of the optical pump signal propagating within the second optical fiber into the first optical fiber portion. The coupling of the optical pump signal into the first optical fiber portion is upstream of the optical amplifier in the first optical fiber portion with respect to the first direction, i.e. the direction the optical probe signal and the modified optical probe signal are travelling in the first optical fiber portion. This allows the modified optical probe signal, obtained by the Brillouin interaction of the coupled-in optical pump signal with the optical probe signal, to be amplified by the optical amplifier.

In other words, the optical pump signal is splitted into two signal portions, wherein a first portion stays within the first second optical fiber, and a second portion is routed to the first optical fiber portion. Thereby, the optical pump signal can be amplified within the pump fiber by an optical amplifier, which may be specifically adapted for pulsed signal amplification, whereas the optical probe signal and the modified optical probe signal, which a typically CW-signals, are amplified by an additional, independent optical amplifier. After pump signal amplification on the pump fiber path, the optical pump signal is coupled into the first optical fiber portion. By coupling the optical pump signal into the first optical fiber portion, it is possible to keep the signal power of the optical pump signal in the first optical fiber portion at an appropriate level for the Brillouin interaction with the optical probe signal.

According to embodiments, the first optical fiber portion is coupled with a further optical (feed) fiber portion, wherein the first optical fiber portion and the further optical fiber portion constitute a fiber loop. The first optical fiber portion and the further optical fiber portion may comprise a first and a second end, wherein the second ends may be coupled for obtaining the fiber loop. In addition, the first optical fiber portion and the further optical fiber portion may run parallel to each other forming a U-shaped optical transmission path between their first ends. Using a fiber loop is advantageous because the injection of the signals necessary for Brillouin interaction and the analysis of the modified optical probe signal can be performed at a single end of the infrastructure to be monitored.

According to embodiments, the free end of the first optical fiber portion is coupled with the second optical signal source, and the free end of the further optical fiber portion is coupled with the first optical signal source. The free ends may be located opposite to the location at which the first optical fiber portion and the further optical fiber portion are coupled. Thereby, the optical probe signal and the optical pump signal are fed into the fiber loop and may be able to interact with each other at least within the first optical fiber portion.

According to embodiments, the first and second optical signal source and the analysis means are comprised within a common monitoring unit. The monitoring unit may be located at a single end of the infrastructure to be monitored and may be adapted to provide the optical signals for Brillouin interaction to the optical fiber loop, respectively receive the optical probe signal modified by Brillouin interaction. The modified optical probe signal may be analyzed regarding Brillouin frequency shift which provides information regarding the temperature and strain variations along the first optical fiber portion. Thereby, the hardware effort is significantly reduced.

According to embodiments, the second optical fiber comprises a plurality of optical fiber sections wherein each optical fiber section comprises an optical amplifier for amplifying the optical pump signal and coupling means for coupling the second optical fiber with the first optical fiber portion. In other words, the optical pump signal may be re-amplified in a spatially distributed manner due to distributed optical amplifiers and partially coupled into the first optical fiber portion. The length of the pump fiber sections may be chosen according to the attenuation of the second optical fiber, the amplification provided by the optical amplifiers contained within the second optical fiber and the losses due to the coupling means. For example, the length of the pump fiber sections may be in the range of 50km - 80km.

According to embodiments, a length of the optical fiber sections and/or the amplification of the optical amplifiers within the second optical fiber and/or the parameters of the coupling means (e.g. the coupling ratio) are adapted to keep the power of the optical pump signal within the first optical fiber portion in the range of 10mW to 200mW. Within said power range, optimized Brillouin interaction between the optical probe signal and the optical pump signal may occur which leads to optimized measurement results.

Also the further optical fiber portion may comprise at least one optical amplifier for amplifying the probe signal. Specifically, the further optical fiber portion may also comprise multiple segments wherein each segment comprises an optical amplifier. Similarly, also the first optical fiber portion may comprise multiple optical fiber portion segments wherein each of the first optical fiber portion segments comprises an optical amplifier. Thereby, also the optical probe signal and the modified optical probe signal propagating through the optical fiber loop may be re-amplified in a spatially distributed manner due to distributed optical amplifiers within the optical fiber loop in order to compensate the attenuation of the optical fiber loop.

According to embodiments, the monitoring system may comprise a plurality of optical repeaters being distributed along the first optical fiber portion and the second optical fiber, each optical repeater comprising an optical amplifier for amplifying the modified optical probe signal within the first optical fiber portion and an optical amplifier for amplifying the optical pump signal within the second optical fiber. The optical amplifier contained in the first optical fiber portion and the optical amplifier contained in the second optical fiber may be located at the same position of the infrastructure to be monitored. In other words, the repeaters may segment or partition the second optical fiber and the first optical fiber portion in segments of the same length. Thereby, the setup of the monitoring system is simplified.

According to embodiments, each optical repeater may further comprise the optical amplifier arranged within the further optical (feed) fiber portion in order to amplify the optical probe signal propagating in the further optical (feed) fiber portion. Therefore, also the further optical fiber portion may be segmented into multiple segments, wherein the length of the segments may be equal to the length of the segments of the first optical fiber portion and the second optical fiber. In other words, each optical amplifier arranged within the further optical fiber portion may be located at the same position as a pair of optical amplifiers arranged within the second optical fiber, respectively, the first optical fiber portion which further simplifies the setup of the monitoring system.

Additionally, each optical repeater may further comprise said coupling means. So, each optical repeater may form an amplifying and coupling unit which contains amplification and coupling means for extending the measurement reach of the monitoring unit. Thereby, all amplification and coupling means of a segment may be arranged within a single entity which is located between two adjacent segments of the monitoring system which further simplifies the setup of the monitoring system.

The coupling means may comprise a first coupling unit arranged within the second optical fiber. Furthermore, the coupling means may comprise a second coupling unit arranged within the first optical fiber portion. The first and second coupling units are coupled using interconnection means. By means of the first coupling unit a pre-determined portion of the optical pump signal propagating within the second optical fiber is coupled out of the second optical fiber and transferred via the interconnection means to the second coupling unit. The second coupling unit is adapted for coupling the portion of the optical pump signal provided by the interconnection means into said first optical fiber portion. The second coupling unit may be further adapted for feeding the portion of the optical pump signal into the first optical fiber portion such that the portion of the optical pump signal may propagate in the second direction, i.e. in the opposite direction of the optical probe signal propagating in the first optical fiber portion in the first direction. The first coupling unit may be located in close or immediate proximity to the optical amplifier within the second optical fiber, namely - referring to the propagation direction of the optical pump signal - behind said optical amplifier, i.e. downstream. The second coupling unit may also be located in close or immediate proximity to the optical amplifier within the first optical fiber portion, namely - referring to the propagation direction of the optical probe signal - in front of said optical amplifier, i.e. upstream. The coupling means may comprise an optical coupler and/or an optical circulator as a first and/or second coupling unit.

The optical amplifiers may be constituted by optical fiber amplifiers, specifically, Erbium doped fiber amplifier. The optical fiber amplifiers are widely used in optical communication links and are typically designed for a long lifetime which is desirable for submarine monitoring applications which imply complex and expensive marine installation. Alternatively, also semiconductor optical amplifiers may be used.

According to embodiments, the monitoring system is adapted for submerged and/or submarine use. The repeaters may comprise a shared housing which comprises the optical amplifiers and the coupling means. The housing may be adapted for submerged and/or submarine use. Furthermore, the optical repeater may be constituted by a self-contained repeater unit comprising said optical amplifiers and said coupling means which are arranged between two adjacent segments of the monitoring system.

According to further embodiments, each optical repeater may comprise multiple optical amplifiers arranged within the first optical fiber portion and/or multiple optical amplifiers arranged within the second optical fiber and/or multiple optical amplifiers arranged within the further optical fiber portion. All amplifiers of a repeater may be arranged between two adjacent segments of the monitoring system. By providing multiple optical amplifiers, the redundancy of the monitoring system is significantly increased because in case of a defective amplifier, an alternate (back up) amplifier may substitute its function. It is further possible to duplicate the complete monitoring systems including fibers and amplifiers, in order to increase system reliability of the submerged part.

According to a further aspect, a method for monitoring an infrastructure using Brillouin Optical Time Domain Analysis (BOTDA) is disclosed. The method may comprise the steps of: providing a first optical fiber portion disposed along the infrastructure; providing a first optical signal source being coupled with the first optical fiber portion, the first optical signal source generating an optical probe signal for propagating in a first direction within the first optical fiber portion; and providing a second optical signal source coupled with the first optical fiber portion. The second optical signal source may generate an optical pump signal for propagating in a second direction within the first optical fiber portion opposite to the first direction, the optical pump signal being adapted to interact with the optical probe signal for generating a modified optical probe signal propagating in the first direction within the first optical fiber portion. The method may further comprise providing a second optical fiber disposed along the infrastructure, wherein the second optical fiber is coupled with the second optical signal source, so that the optical pump signal propagates in the second direction within the second optical fiber. The optical probe signal and the modified optical probe signal may be amplified, e.g. using at least one optical amplifier within the first optical fiber portion. Further, the optical pump signal may be amplified, e.g. using at least one optical amplifier within the second optical fiber. At least a portion of the optical pump signal propagating within the second optical fiber may be coupled into the first optical fiber portion, e.g. using coupling means for optical coupling the second optical fiber with the first optical fiber portion. The method may further comprise analyzing the modified optical probe signal, e.g. by using analysis means being coupled with the first optical fiber portion.

It should be noted that the methods and systems including its preferred embodiments as outlined in the present patent application may be used stand-alone or in combination with the other methods and systems disclosed in this document. Furthermore, all aspects of the methods and systems outlined in the present patent application may be arbitrarily combined. In particular, the features of the claims may be combined with one another in an arbitrary manner. Further, if not explicitly indicated otherwise, embodiments of the invention can be freely combined with each other.

In the present document, the term "couple" or "coupled" refers to elements being in electrical or optical communication with each other, whether directly connected e.g., via wires, fibers, etc., or in some other manner.

The invention is explained below in an exemplary manner with reference to the accompanying drawings, wherein
- Fig. 1: illustrates an example schematic representation of a monitoring system according to prior art;
- Fig. 2: illustrates an example schematic representation of a monitoring system according to a first embodiment;
- Fig. 3: illustrates an example schematic representation of a monitoring system according to a second embodiment; and
- Fig. 4: illustrates an example schematic representation of a monitoring system according to a third embodiment.

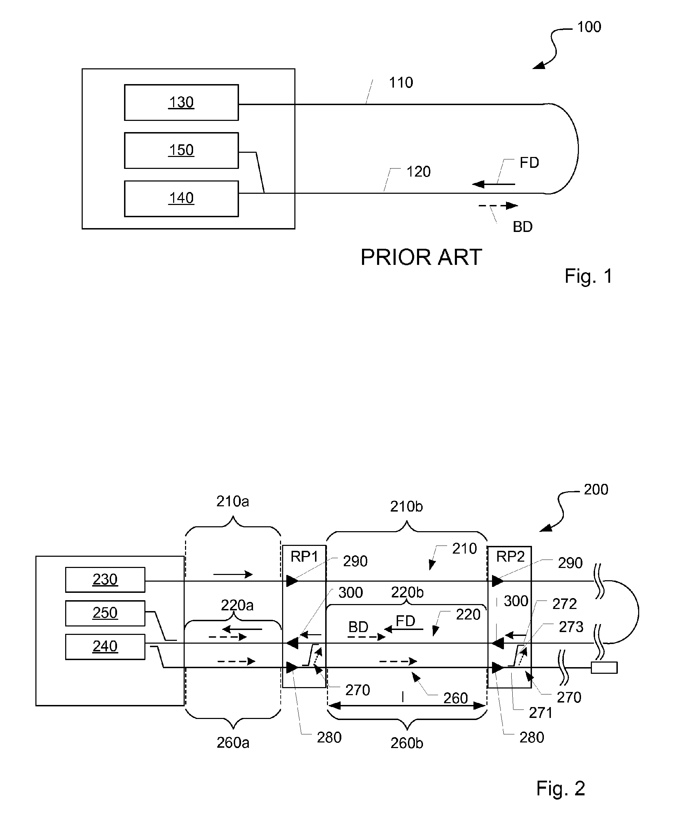

Fig. 1 shows a schematic structure of a monitoring system 100 using Brillouin Optical Time Domain Analysis (BOTDA) according to prior art. The system 100 comprises a first optical fiber portion 120 (also called monitoring optical fiber portion) and a further optical feed fiber portion 110. The fiber portions 110, 120 may run along an infrastructure (not shown) to be monitored. For example, the infrastructure may be a pipeline for transporting gas or oil. By using BOTDA, a position-sensitive measurement of the temperature and/or strain of the pipeline may be obtained, i.e. spatial resolved temperature and/or strain values along the infrastructure can be determined. Additionally, the monitoring optical fiber portion 120 may be located close to the infrastructure to be monitored in order to obtain a temperature and/or strain coupling. For example, the monitoring optical fiber portion 120 may be firmly attached to the infrastructure.

A first end of the further optical fiber portion 110 is coupled with a first optical signal source 130. The first optical signal source 130 is adapted to provide an optical probe signal. Similarly, a first end of the monitoring optical fiber portion 120 is coupled with the second optical signal source 140 providing an optical pump signal.

The optical fiber portions 110, 120 is coupled at their second ends in order to constitute an optical fiber loop connecting the first and second optical signal source 130, 140. Thereby, the optical probe signal provided by the first optical signal source 130 may propagate in a first direction FD through the optical fiber loop, wherein the optical pump signal may propagate in a second direction BD opposite to the first direction FD through the optical fiber loop. In this configuration, the optical pump signal generates Brillouin gain in the monitoring optical fiber portion 120 leading to a modified probe signal.

For analyzing the modified probe signal, the monitoring system 100 comprises analysis means 150. The analysis means 150 is coupled with the first end of the monitoring optical fiber portion 120 in order to receive the modified probe signal.

Fig. 2 shows a monitoring system 200 using BOTDA according to an embodiment. Similarly to the monitoring system 100, the monitoring system 200 comprises a monitoring fiber portion 220 and a further feed fiber portion 210. The monitoring optical fiber portion 220 may run along the infrastructure (not shown) to be monitored, specifically along the longitudinal direction of the infrastructure.

Additionally, said monitoring optical fiber portion 220 may be located close to said infrastructure to be monitored in order to obtain a temperature and/or strain coupling. For example, the monitoring optical fiber portion 220 may be firmly attached to the infrastructure.

A first end of the further optical fiber portion 210 is coupled with a first optical signal source 230. The first optical signal source 230 is adapted to provide a probe signal, specifically a continuous-wave (CW) signal. Similarly, a first end of the monitoring optical fiber portion 220 is coupled with the second optical signal source 240. The second optical signal source 240 is adapted to provide an optical pump signal which may be a pulsed optical signal.

The further optical fiber portion 210 and the monitoring optical fiber portion 220 are coupled at their second ends, said second ends being located opposite to the first and second optical signal sources 230, 240 in order to constitute an optical fiber loop connecting the first and second optical signal source 230, 240. Thereby, the optical probe signal provided by the first optical signal source 230 may propagate in a first direction FD through the monitoring optical fiber portion 220, wherein the optical pump signal may propagate in a second direction BD opposite to the first direction FD through the monitoring optical fiber portion 220. In this configuration, the optical pump signal generates Brillouin gain in the monitoring optical fiber portion 220. The optical probe signal may be amplified through Brillouin interaction with the optical pump signal leading to a modified probe signal. The modified probe signal may propagate in the first direction FD of the monitoring optical fiber portion 220. In addition, the Brillouin frequency of the monitoring optical fiber portion 220 may be changed by the strain or temperature applied on the fiber due to strain and/or temperature shifts of the monitored infrastructure. Therefore, by analyzing the Brillouin frequency shift information regarding the temperature or strain of the monitored infrastructure can be obtained.

For analyzing the modified probe signal containing Brillouin frequency shift information, the monitoring system 200 comprises analysis means 250. The analysis means 250 is coupled with the first end of the monitoring optical fiber portion 220 in order to receive the modified probe signal. The analysis means 250 may comprise an entity for receiving and analyzing the modified probe signal. Specifically, the received modified probe signal may be analyzed regarding the frequency shift of the modified probe signal induced by a local temperature and/or strain variation of the monitoring optical fiber portion 220. The localization of the temperature and/or strain variation, i.e. the location at the infrastructure at which the temperature and/or strain variation occurs, may be determined, e.g. based on the runtime of the modified probe signal.

For extending the measurement reach of the monitoring system 200, the monitoring system 200 comprises a second optical fiber, also called optical pump fiber 260. The optical pump fiber 260 may run parallel to the monitoring optical fiber portion 220. Specifically, the optical pump fiber 260 may run in close proximity to the monitoring optical fiber portion 220. The optical pump fiber 260 may also run along the longitudinal direction of the infrastructure to be monitored.

The first end of the pump fiber 260 may be coupled with the second optical signal source 240. Thereby, the optical pump signal provided by the second optical signal source 240 may also be coupled into the optical pump fiber 260 and propagate along said optical pump fiber 260. The second end of the optical pump fiber 260 may be terminated in a non-reflecting manner, e.g. with an optical absorber. In order to enhance the power of the optical pump signal within the monitoring optical fiber portion 220, the monitoring system 200 comprises coupling means 270 which provide a coupling of the optical pump signal propagating within the optical pump fiber 260 into the monitoring optical fiber portion 220. Thereby at least a portion of the optical pump signal propagating within the optical pump fiber 260 is transferred to the monitoring optical fiber portion 220 thereby enhancing the power of the optical pump signal propagating within the monitoring optical fiber portion 220.

The optical probe signal and the optical pump signal may comprise a wavelength within the C- band, i.e. in the 1530-1565 nm wavelength region, specifically 1550nm, in order to benefit from the low fiber optic attenuation within said wavelength region which is typically between 0.18-0.20 dB/km. For enhancing the Brillouin effect, there may be a wavelength shift of 0,1nm between the optical probe signal and the optical pump signal, leading to an enhanced measurement reach.

In order to further enhance the measurement reach of the measurement system 200, the monitoring system 200 may further comprise at least one optical amplifier 280, in the following also referred to as pump signal amplifier 280. The pump signal amplifier 280 may be located within the optical pump fiber 260 and may be adapted to amplify the optical pump signal. Specifically, the pump signal amplifier 280 is adapted to amplify a pulsed optical signal. The pump signal amplifier 280 may be constituted by a fiber amplifier, specifically an Erbium Doped Fiber Amplifier (EDFA). The pump signal amplifier 280 may be located at a distance of the second optical signal source 240 in order to compensate the fiber attenuation of the optical pump fiber 260. Specifically, the optical pump fiber 260 may comprise a plurality of optical pump fiber sections 260a, 260b, wherein an optical pump signal amplifier 280 is located between two adjacent optical pump fiber sections 260a, 260b.

The coupling means 270 may comprise a first optical coupling unit 271 located within the optical pump fiber 260. Specifically, the coupling means may be located between two adjacent optical pump fiber sections 260a, 260b. The coupling means 270 may split the optical pump signal into a first portion which continues propagating within the optical pump fiber 260 and a second portion which may be coupled into the monitoring optical fiber portion 220. The power of the optical pump signal may be splitted according to a pre-determined splitting ratio between the first and second portion. With respect to the propagation direction of the optical pump signal within the optical pump fiber 260 (second direction BD), the pump signal amplifier 280 may be located in close proximity in front of the first optical coupling unit 271. The pump signal amplifier 280 may amplify the optical pump signal propagating within the optical pump fiber 260 such that even after splitting the optical pump signal there is enough optical signal power to be coupled into the monitoring optical fiber portion 220, respectively, to continue propagating within the next section of the optical pump fiber 260. Specifically, the length l of an optical pump fiber section 260a, 260b and/or the amplification obtained by the optical pump signal amplifier 280 may be chosen such that the optical pump signal power within the monitoring optical fiber portion 220 is in the range of 10mW to 200mW. The power range mentioned before refers to the pulsed optical pump signal power, more precisely, it refers to the launched pump power in the monitoring optical fiber during the pulses (i.e. pulse power).

The first optical coupling unit 271 may be chosen such that at least half of the optical pump signal power is coupled out of the optical pump fiber 260, i.e. the first optical coupling unit 271 may comprise coupling ratios of 50/50, 60/40, 70/30, 80/20 or 90/10, wherein the first number indicates the percentage of optical pump signal power coupled out of the optical pump fiber 260 and the second number indicates the percentage of optical pump signal power remaining within the optical pump fiber 260.

The coupling means 270 may further comprise a second coupling unit 272 located within the monitoring optical fiber portion 220. The second optical coupling unit 272 may be coupled with the first optical coupling unit 271 by interconnection means 273. The interconnection means 273 may be any optical waveguide, e.g. an optical fiber or an integrated optical waveguide. The optical pump signal portion coupled out of the optical pump fiber 260 by means of the first coupling unit 271 may be guided by said interconnection means 273 to the second optical coupling unit 272 which couples said optical pump signal portion into the monitoring optical fiber portion 220. The optical pump signal portion may propagate within the monitoring optical fiber portion 220 in the second direction BD, i.e. in the opposite direction of the probe signal propagating in the first direction FD. Thereby, the optical pump signal portion may cause Brillouin interaction with the probe signal as described above.

The monitoring system may further comprise at least one optical amplifier 290, in the following also referred to as first probe signal amplifier 290 which is arranged within the further optical feed fiber portion 210. The first probe signal amplifier 290 may be constituted by a fiber amplifier, specifically an Erbium Doped Fiber Amplifier (EDFA). Alternatively, the first probe signal amplifier 290 may be constituted by a semiconductor optical amplifier (SOA). The first probe signal amplifier 290 may be adapted to compensate the fiber attenuation of the further optical feed fiber portion 210 thereby keeping the signal power of the optical probe signal in a power range appropriate for Brillouin interaction. The further optical fiber portion 210 may be segmented into several optical fiber portion segments 210a, 210b wherein each optical fiber portion segment 210a, 210b comprises a first probe signal amplifier 290 in order to compensate the fiber attenuation of said optical fiber portion segment 210a, 210b. Specifically, the first probe signal amplifier 290 may be located between two optical fiber portion segments 210a, 210b.

Similarly to the further optical fiber portion 210, also the monitoring optical fiber portion 220 may comprise at least one optical amplifier 300, in the following also referred to as second probe signal amplifier 300. The second probe signal amplifier 300 may also be constituted by a fiber amplifier, specifically an Erbium Doped Fiber Amplifier (EDFA). Alternatively, the second probe signal amplifier 300 may be constituted by a semiconductor optical amplifier (SOA). The second probe signal amplifier 300 may be adapted to compensate the fiber attenuation of the monitoring optical fiber portion 220 thereby keeping the signal power of the optical probe signal in a power range necessary for Brillouin interaction. Similar to the further optical fiber portion 210, also the monitoring optical fiber portion 220 may be segmented into several monitoring optical fiber portion segments 220a, 220b wherein each monitoring optical fiber portion segment 220a, 220b comprises a second probe signal amplifier 300 in order to compensate the fiber attenuation of the monitoring optical fiber portion segment 220a, 220b. Specifically, the second probe signal amplifier 300 may be located between two monitoring optical fiber portion segments 220a, 220b.

As shown in Fig. 2, a portion of the optical pump signal propagating within the optical pump fiber 260 is coupled into the monitoring optical fiber portion 220 in front of the second probe signal amplifier 300, referring to the propagation direction of the optical probe signal within the monitoring optical fiber portion 220, i.e. the first direction FD. In other words, with respect to the first direction FD, the second coupling unit 272 is arranged upstream the second probe signal amplifier 300 within the monitoring optical fiber portion 220. More specifically, the second coupling unit 272 may be located in close proximity to the second probe signal amplifier 300 just in front of to the second probe signal amplifier 300.

Second probe signal amplifiers 300 may have directional dependency, i.e. the signal may only be amplified in a first direction and damped or absorbed in a second direction opposite to the first one. Specifically fiber amplifiers show upper-mentioned behavior. Referring to the second probe signal amplifiers 300, said second probe signal amplifiers 300 may be arranged within the monitoring optical fiber portion such that the optical probe signal propagating in the first direction FD may be amplified. Therefore, the optical pump signal propagating in the second direction BD within the monitoring optical fiber portion 220 may be damped or absorbed by said second probe signal amplifiers 300 because of their directional dependency. By coupling a portion of the optical pump signal propagating within the optical pump fiber 260 into the monitoring optical fiber portion 220 just behind the second probe signal amplifier 300 (with respect to the second direction BD), the monitoring optical fiber portion segment 220b located in the second direction BD downstream the second probe signal amplifier 300 is exposed to an optical pump signal of appropriate power level, thereby enabling Brillouin interaction within said monitoring optical fiber portion segment 220b.

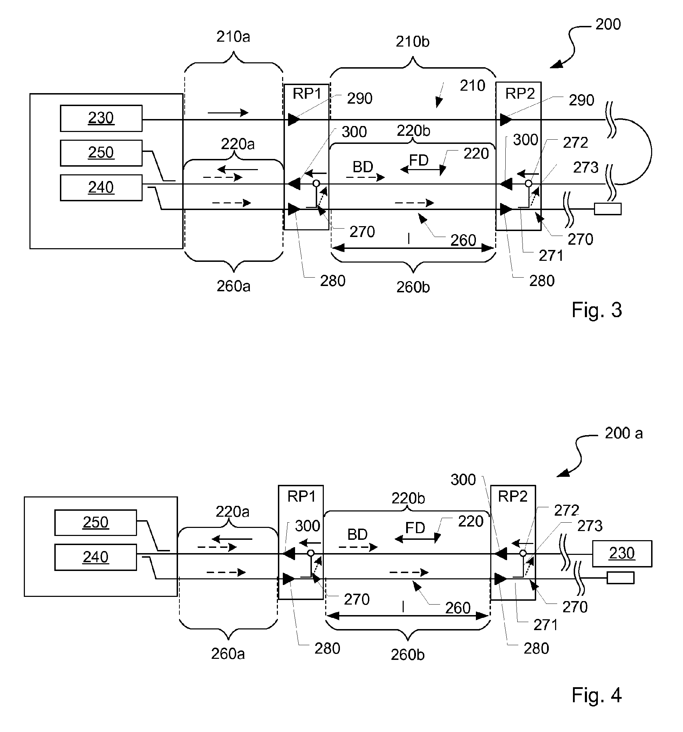

Fig. 3 shows a further embodiment of the monitoring system 200. The monitoring system comprises optical circulators within the monitoring optical fiber portion 220, i.e. the optical circulator constitutes the second coupling unit 272. Using optical circulators may be advantageous because the optical signal coupled into a port of the optical circulator is only transmitted to the next following port of the optical circulator. Thereby a selective coupling of the optical pump signal portion into the monitoring optical fiber portion segment 220b is obtained. Similarly, a selective coupling of the modified optical probe signal propagating within the monitoring optical fiber portion segment 220b towards the second optical probe amplifier 300 is obtained.

In the embodiments of Fig. 2 and Fig. 3, the optical fiber portion segments 210a, 210b, 220a, 220b and the optical pump fiber segments 260a, 260b may have the same length l. In other words, because of the monitoring optical fiber portion 220, the further optical fiber portion 210 and the optical pump fiber 260 extending parallel along the longitudinal direction of the infrastructure to be monitored, the first and second optical probe signal amplifiers 290, 300 and the optical pump signal amplifier 280 corresponding to a certain segment 210a, 210b, 220a, 220b, 260a, 260b are located at the same longitudinal position of the infrastructure. Preferably, the first and second optical probe signal amplifiers 290, 300 and the optical pump signal amplifier 280 located between two adjacent monitoring optical fiber portion segments 220a, 220b, optical fiber portion segments 210a, 210b, respectively, optical pump fiber segments 260a, 260b form an optical repeater RP1, RP2, i.e. each optical repeater RP1, RP2 comprises one first and one second optical probe signal amplifier 290, 300 and one optical pump signal amplifier 280. An optical repeater RP1, RP2 may form a self-contained repeater module, e.g. arranged in an enclosure that houses all elements that are necessary for an independent operation of the repeater such as amplifier(s), coupling element(s), etc. Each individual repeater may be arranged in a separate enclosure. Alternatively, an optical repeater RP1, RP2 may comprise a shared housing, in which the first and second optical probe signal amplifier 290, 300 and the optical pump signal amplifier 280 are integrated. Additionally, the optical repeater RP1, RP2 may comprise the coupling means 270, i.e. the first and second coupling unit 271, 272 and the interconnection means 273.

The monitoring system 200 may be adapted for submerged or submarine purposes, e.g. monitoring of underground or submarine pipelines. Therefore, an optical repeater RP1, RP2 may comprise a housing which is adapted for underground or submarine use. Additionally, the monitoring system may comprise robust optical amplifier technology and optical components in order to achieve a reliable operation of the monitoring system 200. Typically, monitoring systems 200 for underground or submarine purposes should have a lifetime of at least 20 years, so the optical components of the monitoring system may be designed for a lifetime of at least 20 years.

Fig. 4 shows a further embodiment of a monitoring system 200a. The monitoring system 200a essentially corresponds to the monitoring system 200 shown in Figures 2 and 3. Therefore only the differences are described in the following. Otherwise, the above described features of the monitoring system 200 also apply to the monitoring system 200a. The main difference is that the monitoring system 200a uses a double-end feeding of the optical probe signal and the optical pump signal whereas in Figures 2 and 3 single-end feeding is shown. So monitoring system 200a does not use a fiber loop, but only a single monitoring optical fiber 260 with two ends. The optical pump signal is coupled into the monitoring optical fiber 220 at the first end, and the optical probe signal is coupled into the monitoring optical fiber 220 at the second end opposite to the first one. In other words, the first and second optical signal sources are located at opposite ends of the monitoring optical fiber 220. This eliminates the need for the further optical feed fiber portion 210. Therefore, each optical repeater RP1, RP2 comprises only the optical amplifiers 280 and 300 but no further optical amplifier 290. In addition, the monitoring system 200a comprises the optical pump fiber 260 for spatial distributed coupling of a pump signal portion into the monitoring optical fiber 220.

Using a double-end feeding, the architecture of the optical repeaters RP1, RP2 can be simplified and the number of optical fibers can be reduced, although signal feeding has to be obtained at different locations of the infrastructure to be monitored.

A monitoring system for monitoring strain and/or temperature of an infrastructure using Brillouin sensing technique has been presented. To extend the measurement reach of such BOTDA fiber distributed sensing system along submarine structures (pipeline), it has been proposed to implement specific submerged amplifiers (optical repeaters) ensuring spatially distributed re-amplification of both optical probe signal and optical pump signal. This monitoring technique may allow the control of long (>300km) pipeline integrity (i.e. leakage detection for instance) using a single end monitoring equipment. This allows oil and gas companies to detect failures at a very early stage thereby avoiding the huge costs associated to pipeline failures for instance.

The exemplary proposed BOTDA repeater is equipped with three optical amplifiers: two amplifiers for both Go and Return probe signal amplification, and a third one for optical pump signal amplification. The periodical amplification of both Go and Return probe signals may maintain the optical probe signal within a suitable power level range all along its propagation through the fiber loop. Thus, the optical probe signal OSNR can be preserved along the propagation in order to guarantee suitable measurement conditions and performances.

The optical pump signal is used to generate Brillouin backscattering waves along the monitored fiber section (monitoring optical fiber portion). Satisfactory Brillouin backscattering waves may be generated when the pump signal power is comprised within a typical range of 200mW to 10mW. Thus, the pulsed pump signal amplification is therefore optimized to maintain the pump level within said operating range all along its propagation through the monitoring optical fiber portion. A specific pump fiber may be used for propagating and re-amplifying the optical pump signal in each optical repeater. After amplification, optical pump signal energy may be subdivided in two parts thanks to optical fuse couplers. The major part of the optical pump signal energy may be routed through the monitored fiber section whereas the other pump energy portion is routed through the optical pump fiber to allow optical pump signal re-amplification within the next repeater.

It shall be noted that the wavelengths of the optical pump signal and the optical probe signal are typically shifted by 0.1nm. So, it may not be possible to use standard optical filtering technologies to perform the multiplexing of both optical pump signal and the optical probe signal through the monitored fiber section.

Two different pump/probe light wave coupling topologies have been presented. A first coupling topology is based on optical couplers whereas a second pump/probe waves coupling topology is based on optical circulator.

It shall be also considered in such repeater design that the pulsed pump light wave may involve high optical peak power. The choice of the most robust amplifier topology and optical components is therefore suggested to ensure reliable operation of this submerged optical repeater design. Fuse optical couplers can withstand very large optical powers and may therefore be the preferred topology for pump/probe coupling.

The repeater spacing in the range of 50km to 80km may be optimized according to specific system requirements. The repeater topology as detailed above provides the amplification for one fiber distributed sensing path. Nonetheless, each repeater could accommodate a larger number of amplifiers in order to increase the redundancy (e.g. to increase the reliability) of such monitoring systems, or to allow more complex fiber monitoring networks.

It should be noted that the description and drawings merely illustrate the principles of the proposed methods and systems. It will thus be appreciated that those skilled in the art will be able to devise various arrangements that, although not explicitly described or shown herein, embody the principles of the invention and are included within its spirit and scope. Furthermore, all examples recited herein are principally intended expressly to be only for pedagogical purposes to aid the reader in understanding the principles of the proposed methods and systems and the concepts contributed by the inventors to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

Finally, it should be noted that any block diagrams herein represent conceptual views of illustrative circuitry embodying the principles of the invention.

## Claims

1. System for monitoring an infrastructure using Brillouin Optical Time Domain Analysis (BOTDA), the system comprising:
- a first optical fiber portion (220);
- a first optical signal source (230) coupled with the first optical fiber portion (220), the first optical signal source (230) configured for generating an optical probe signal for propagating in a first direction (FD) in the first optical fiber portion (220);
- a second optical signal source (240) for generating an optical pump signal for propagating in a second direction (BD) in the first optical fiber portion (220) opposite to the first direction (FD), the optical pump signal being adapted to interact with the optical probe signal for generating a modified optical probe signal propagating in the first direction (FD) in the first optical fiber portion (220);
- an optical amplifier (300) associated with the first optical fiber portion (220) for amplifying the modified optical probe signal;
- analysis means (250) coupled with the first optical fiber portion (220), the analysis means (150) being adapted for analyzing the modified optical probe signal;
- a second optical fiber (260) coupled with the second optical signal source (240), and
- coupling means (270) for optical coupling the second optical fiber (260) with the first optical fiber portion (220), the coupling means (270) being adapted for coupling at least a portion of the optical pump signal propagating in the second optical fiber (260) into the first optical fiber portion (220) upstream of the optical amplifier (300) with respect to the first direction, to interact with the optical probe signal for generating the modified optical probe signal.

2. The system according to claim 1, wherein the first optical fiber portion (220) is coupled with a further optical fiber portion (210), wherein the first optical fiber portion (220) and the further optical fiber portion (210) form a fiber loop.

3. The system according to claim 2, wherein a free end of the first optical fiber portion (220) is coupled with the second optical signal source (240) and a free end of the further optical fiber portion (210) is coupled with the first optical signal source (230).

4. The system according to claim 2 or 3, further comprising at least one optical amplifier (280) associated with the second optical fiber (260) for amplifying the optical pump signal in the second optical fiber (260).

5. The system according to claim 4, wherein the second optical fiber (260) comprises a plurality of optical fiber sections (260a, 260b), wherein each optical fiber section (260a, 260b) comprises an optical amplifier (280) for amplifying the optical pump signal and coupling means (270) for coupling the second optical fiber (260) with the first optical fiber portion (220).

6. The system according to claim 5, wherein a length of a second optical fiber section (260a, 260b) and/or the optical amplifiers (280) associated with the second optical fiber (260) and/or the coupling means (270) are adapted to keep the power of the optical pump signal in the first optical fiber portion (220) in the range of 10mW to 200mW.

7. The system according to anyone of the preceding claims 2 - 6, wherein the further optical fiber portion (210) comprises at least one optical amplifier (290) for amplifying the probe signal.

8. The system according to anyone of the preceding claims, comprising a plurality of optical amplifiers (300) associated with the first optical fiber portion (220) for amplifying the optical probe signal and/or the modified optical probe signal.

9. The system according to anyone of the preceding claims, comprising a plurality of optical repeaters (RP1, RP2) being distributed along the first optical fiber portion (220) and the second optical fiber (260), each optical repeater (RP1, RP2) comprising an optical amplifier (300) for amplifying the optical probe signal and/or the modified optical probe signal in the first optical fiber portion (220) and an optical amplifier (280) for amplifying the optical pump signal in the second optical fiber (260).

10. The system according to claim 9, wherein each optical repeater (RP1, RP2) further comprises an optical amplifier (290) associated with the further optical fiber portion (210) in order to amplify the optical probe signal.

11. The system according to anyone of the preceding claims, wherein the coupling means (270) comprise a first coupling unit (271), a second coupling unit (272) and interconnection means (273) for coupling the first and second coupling unit (271, 272), wherein the first coupling unit (271) is arranged to couple a portion of the optical pump signal propagating in the second optical fiber (260) into the interconnection means (273) and the second coupling unit (272) is arranged to couple the portion of the optical pump signal carried by the interconnection means (273) into said first optical fiber portion (220).

12. The system according to anyone of the preceding claims, wherein the optical amplifiers (280, 290, 300) are fiber amplifiers, specifically, Erbium doped fiber amplifier (EDFA).

13. The system according to anyone of the preceding claims, adapted for use in submerged and/or submarine pipeline integrity monitoring.

14. The system according to anyone of the preceding claims 9 - 13, wherein each optical repeater (RP1, RP2) is constituted by a self-contained repeater unit comprising optical amplifiers (280, 290, 300) and said coupling means (270).

15. Method for monitoring an infrastructure using Brillouin Optical Time Domain Analysis (BOTDA), the method comprising the steps of:
- providing a first optical fiber portion (220) disposed along the infrastructure;
- generating an optical probe signal for propagating in a first direction (FD) in the first optical fiber portion (220);
- providing a second optical fiber (260) disposed along the infrastructure;
- generating an optical pump signal, the optical pump signal being adapted to interact with the optical probe signal for generating a modified optical probe signal propagating in the first direction (FD) in the first optical fiber portion (220);
- coupling the optical pump signal into the second optical fiber (260);
- coupling at least a portion of the optical pump signal propagating in the second optical fiber (260) into the first optical fiber portion (220) for propagation in a second direction (BD) opposite to the first direction;
- amplifying the modified optical probe signal in the first optical fiber portion (220); and
- BOTDA analyzing the modified optical probe signal.
